(19) Europäisches Patentamt
European Patent Office
Office européen des brevets

(11) Veröffentlichungsnummer : **0 077 297**
**B1**

(12) # EUROPÄISCHE PATENTSCHRIFT

(45) Veröffentlichungstag der Patentschrift : **26.03.86**

(51) Int. Cl.⁴ : **C 09 D 7/00**, D 06 P 1/52

(21) Anmeldenummer : **82810410.9**

(22) Anmeldetag : **04.10.82**

(54) **Gemische aus Polyacrylsäure und einem Acrylsäure-Acrylamid Copolymer als Verdickungsmittel in Druckpasten zum Färben und Bedrucken von Fasermaterialien.**

(30) Priorität : **09.10.81 CH 6477/81**

(43) Veröffentlichungstag der Anmeldung : **20.04.83 Patentblatt 83/16**

(45) Bekanntmachung des Hinweises auf die Patenterteilung : **26.03.86 Patentblatt 86/13**

(84) Benannte Vertragsstaaten : **AT CH DE FR GB IT LI**

(56) Entgegenhaltungen :
**EP-A- 0 042 678**
**DE-A- 2 744 395**
**FR-A- 2 285 488**
**GB-A- 800 735**
**GB-A- 871 193**
**GB-A- 2 071 159**
**US-A- 4 331 572**
**CHEMICAL ABSTRACTS, Band 92, Nr. 12, 24. März 1980, Seite 70, Nr. 95637z, Columbus, Ohio, USA, S. MIZUTANI et al.: "Tanning with resins. I. Reactions of collagen fibers with acrylic polymers"**
**CHEMICAL ABSTRACTS, Band 81, Nr. 22, 2. Dezember 1974, Seite 66, Nr. 137513m, Columbus, Ohio, USA**
**CHEMICAL ABSTRACTS, Band 84, Nr. 2, 12. Januar 1976, Seite 78, Nr. 6404r, Columbus, Ohio, USA**
**CHEMICAL ABSTRACTS, Band 80, Nr. 26, 1. Juli 1974, Seite 18, Nr. 146774d, Columbus, Ohio, USA**

(73) Patentinhaber : **CIBA-GEIGY AG**
**Klybeckstrasse 141**
**CH-4002 Basel (CH)**

(72) Erfinder : **Défago, Raymond**
**Bäumlihofstrasse 421**
**CH-4125 Riehen (CH)**
Erfinder : **Sütterlin, Wolfgang**
**Brunnenstrasse 7**
**D-7850 Lörrach-Haagen (DE)**

**EP 0 077 297 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Das Färben und Bedrucken von Fasermaterialien stellt hohe Anforderungen an die rheologischen Eigenschaften der Druckpasten, die in zeitgemässen Druckmaschinen oft hohen Scherkräften ausgesetzt werden. Zweckdienlich sind deshalb vor allem strukturviskose Druckpasten, bei welchen die Viskosität unter dem Einfluss von Scherkräften abnimmt, d. h. bei welchen sich die ursprüngliche Viskosität wieder einstellt, sobald der Einfluss der Scherkräfte aufhört. Solche strukturviskose Druckpasten weisen einen relativ niedrigen Fliessindex, d. h. fliessen leicht unter dem Einfluss von Scherkräften und verteilen sich gleichmässig z. B. in den Schablonen der Rotationsfilmdruckmaschinen. Zudem sind sie leicht rührbar und pumpbar. Bisher verwendete, strukturviskose Druckpasten enthalten in der Regel Homopolymerisate auf Basis von Acrylsäure. Diese bekannten Druckpasten weisen jedoch den Nachteil auf, dass bei hohen, langwirkenden Scherbeanspruchungen ein permanenter Viskositätsverlust der Druckpasten eintreten kann.

Der vorliegenden Erfindung liegt somit die Aufgabe zugrunde, Druckpasten zur Verfügung zu stellen, die gegen hohe und langwirkende Scherkräfte, wie sie in modernen Druckmaschinen auftreten, besonders beständig sind. Diese Aufgabe wird unerwarteterweise dadurch gelöst, dass als Verdickungsmittel in der Druckpaste ein Copolymerisat aus Acrylsäure und Acrylamid neben Polyacrylsäure mitverwendet wird.

Aus der GB-A-2 007 238 ist ein Verdickungsmittel bekannt, das ein Gemisch

(A) eines vernetzten, in Wasser quellbaren Homo- oder Copolymers aus 10 bis 100 Teilen Acryl-, Methacrylsäure oder 2-Acrylamid-2-methylpropan-sulfonsäure und 90 bis 0 Teilen Acryl- oder Methacrylamid und

(B) eines wasserlöslichen Homo- oder Copolymers aus Acryl-, Methacrylamid, Acryl-, Methacrylsäure und/oder 2-Acrylamid-2-methylpropan-sulfonsäure

enthält.

Das bekannte Verdickungsmittel eignet sich besonders gut dazu, in Siebdruckpasten zum Färben und Bedrucken von Teppichen, vor allem Polyamid-Teppichen bei sauren pH-Werten bis etwa 2 eingesetzt zu werden, wobei das Polymer zweckdienlich 2-Acrylamid-2-methylpropan-sulfonsäure enthält. GB-A-2 007 238 enthält keinerlei Hinweise über das Molekulargewicht der in Wasser quellbaren Polymere und der wasserlöslichen Polymere.

Im Gegensatz hierzu betrifft der Gegenstand der vorliegenden Erfindung ein Verdrickungsmittel, das dadurch gekennzeichnet ist, dass es (A) ein mindestens teilweise vernetztes Copolymerisat aus Acrylsäure und Acrylamid, welches ein Molverhältnis Acrylsäure : Acrylamid von 1 : 0,9 bis 1 : 1,1 und ein Molekulargewicht von $1 \cdot 10^6$ bis $6 \cdot 10^6$ aufweist, und (B) eine Polyacrylsäure, welche ein Molekulargewicht von $6 \cdot 10^5$ bis $1 \cdot 10^6$ aufweist,

enthält.

Das erfindungsgemässe Verdickungsmittel eignet sich besonders gut dazu, im Gegensatz zum bekannten Verdickungsmittel als Emulsion mit einem pH-Wert von 5,8 bis 9 in wässrigen Druckpasten zum Färben und Bedrucken von textilen Fasermaterialien, vor allem Geweben, in Transfer- oder Direktdruckverfahren eingesetzt zu werden.

Die Verwendung des Verdickungsmittels in Druckpasten zum Färben und Bedrucken von Fasermaterialien, das Applikationsverfahren zum Färben und Bedrucken dieser Materialien, die Druckpaste zur Durchführung des Applikationsverfahrens und das nach dem Verfahren gefärbte und bedruckte Fasermaterial bilden weitere Gegenstände der vorliegenden Erfindung.

Dies gilt auch für den bedruckten Zwischenträger, sofern das Fasermaterial nach dem sogenannten Transferdruckverfahren behandelt wird.

Als Komponente (A) des erfindungsgemässen Verdickungsmittels kommen vor allem hochmolekulare Copolymerisate in Frage, die ein bevorzugtes Molekulargewicht von $2 \cdot 10^6$ bis $3 \cdot 10^6$ aufweisen, wobei das Copolymerisat als Aktivsubstanz der Komponente (A) in wässrigem Medium, d. h. durch Zusatz von Wasser, vorteilhafterweise strukturviskos ist. Die Copolymerisate der angegebenen Art sind in der Regel mindestens teilweise vernetzt und weisen somit vorwiegend verzweigte Ketten auf.

Solche Copolymerisate werden nach an sich bekannten Methoden hergestellt, indem vorzugsweise äquimolare Mengen Acrylsäure und Acrylamid in der Regel in wässrigem Medium copolymerisiert werden. Hierbei ist es vorteilhaft, die Copolymerisationsreaktion bei Raumtemperatur, z. B. 20 °C, zu beginnen und bei allmählich steigenden Temperaturen bis etwa 60 °C weiterzuführen. Zudem können bei der Copolymerisation zweckmässig Stabilisatoren und Aktivatoren, z. B. Persulfate, Pyrosulfite und Peroxyde, sowie in der Regel Vernetzungsmittel, z. B. olefinische Doppelbindungen enthaltende Verbindungen, vorzugsweise Vinyl- oder Allylverbindungen, insbesondere Triallylisocyanurat eingesetzt werden. Solche Copolymerisate sind an sich bekannt und z. B. in der europäischen Patentanmeldung 42 678 beschrieben.

Bei der Komponente (B), die im Gemisch mit der Komponente (A) im erfindungsgemässen Verdickungsmittel enthalten ist, handelt es sich um Polyacrylsäure, deren bevorzugtes Molekulargewicht 7 bis $9 \cdot 10^5$ beträgt.

Als Komponente (B), die im Vordergrund des Interesses steht, wird Polyacrylsäure, die vorwiegend

lineare Ketten aufweist, eingesetzt und welche als Aktivsubstanz in wässrigem Medium, d. h. durch Zusatz von Wasser, vorteilhafterweise ebenfalls strukturviskos ist. Eine typische Polyacrylsäure der angegebenen Art ist als CARBOPOL 820® der GOODRICH Chemical Corporation im Handel erhältlich.

In seiner bevorzugten Ausführungsart enthält das erfindungsgemässe Verdickungsmittel das Copolymerisat als Komponente (A) und Polyacrylsäure als Komponente (B) im Gewichtsverhältnis (A) : (B) von 0,15 bis 30 : 1, vor allem 0,15 : 1 bis 15 : 1 und insbesondere 5 : 1 bis 8 : 1.

In der Regel liegt das Verdickungsmittel als wässrige-organische, strukturviskose Wasser-in-Oel Emulsion vor, die zusätzlich zu den Polymerisaten (A) und (B) ein wasserunlösliches Lösungsmittel, Emulgatoren, ein Neutralisationsmittel und gegebenenfalls ein Entlüftungs- oder Entschäumungsmittel enthält.

Nach Vermischen mit Wasser im Verhältnis 1 : 10 bis 1 : 20 weisen die Neutralisationsmittel enthaltenden Emulsionen des Verdickungsmittels einen pH-Wert von 5,8 bis 9 auf. Sofern die Druckpaste zum Färben und Bedrucken von Fasermaterialien im Direktdruck eingesetzt wird, liegen die bevorzugten pH-Werte der Druckpaste bei 5,8 bis 6,9, insbesondere 6,0 bis 6,8. Bei ihrem Einsatz im Transferdruckverfahren liegen die bevorzugten pH-Werte der Druckpasten indessen bei 6 bis 9, insbesondere 6,5 bis 8 auf.

Als Lösungsmittel für die Oelphase kommen vor allem Kohlenwasserstoffe, z. B. technisches Lackbenzin oder technische Paraffinöle, insbesondere die im Handel erhältlichen Paraffinöle (z. B. ISOPAR®-Marken von ESSO) in Betracht. Solche Lösungsmittel weisen in der Regel einen Flammpunkt über etwa 30 °C, vorzugsweise von 50 bis 100 °C, einen Siedebereich von etwa 160 bis etwa 220 °C und ein mittleres Molekulargewicht von etwa 150 bis etwa 180 auf.

Bei den Emulgatoren ist der Einsatz eines Wasser-in-Oel Emulgators in Gemisch mit einem Oel-in-Wasser Emulgator besonders zweckmässig, um lagerstabile Wasser-in-Oel Emulsionen des Verdickungsmittels zu erhalten. Als Oel-in-Wasser Emulgatoren kommen z. B. Alkanolamide höhermolekularer Fettsäuren, insbesondere Aethanolamide von ungesättigten oder vorzugsweise gesättigten Fettsäuren mit 12 bis 22, vorzugsweise 12 bis 18 Kohlenstoffatomen wie Linol-, Linolen-, Oel-, Laurin-, Palmitin- und Stearinsäure vor allem in Form ihrer technischen Gemische, Alkylen- oder vor allem Aethylenoxydaddukte aus Fettalkoholen, wobei sich die Fettalkohole von den vorstehend angegebenen Fettsäuren ableiten, z. B. Addukte aus Oleylalkohol und Aethylenoxyd, Alkylen- vor allem Aethylenoxydaddukte von Estern aus Polyalkoholen wie Pentaerythrit oder Sorbit bzw. Anhydrosorbite und den Fettsäuren der vorstehend angegebenen Art, insbesondere Aethylenoxydaddukte von Sorbitanfettsäureestern in Betracht. Als Wasser-in-Oel Emulgatoren werden vor allem die soeben beschriebenen Ester aus Polyalkoholen und Fettsäuren, z. B. Sorbitanfettsäureester, eingesetzt.

Als Neutralisationsmittel kommen Ammoniak, vorzugsweise als wässrige Lösung, Alkanolamine, d. h. Mono-, Di- und Trialkanolamine mit je 1 bis 4, vorzugsweise 2 oder 3 Kohlenstoffatomen im Alkanolrest, z. B. Triäthanolamin, und vor allem Alkalimetallhydroxyde, wie Kalium- und insbesondere Natriumhydroxyd, vorzugsweise in Form ihrer wässrigen Lösungen, in Betracht.

Das Verdickungsmittel kan noch bei Bedarf ein Entlüftungs- oder Entschäumungsmittel enthalten.

Grundsätzlich sind alle handelsübliche Entschäumungs- oder Entlüftungsmittel als fakultative Komponente der erfindungsgemässen Verdickungsmittel einsetzbar, vorausgesetzt, dass sie keinen in Betracht fallenden, ionischen Charakter aufweisen, welcher die erwünschten rheologischen Eigenschaften des Verdickungsmittels beeinträchtigen würde. So kommen z. B. nicht-ionische, handelsübliche Silikonöle oder Silikonölemulsionen in Frage. Silikonölemulsionen weisen jedoch neben guten Entschäumungseigenschaften nur schwache Entlüftungseigenschaften auf. Bevorzugt sind deshalb für ihren Einsatz als Komponente (C) silikonälarme bis silikonölfreie Entlüftungsmittel, die im allgemeinen 0 bis 10, insbesondere 2 bis 8 Gewichtsprozent eines herkömmlichen Silikonöls enthalten.

Bevorzugte Entlüftungsmittel enthalten z. B. als Aktivsubstanz hochsiedene Kohlenwasserstoffe, hydrierte Naphthaline, Mineralöle, fette Oele oder unlösliche Metallseifen oder deren Gemische und weisen gegebenenfalls den vorstehend angegebenen Gehalt an Silikonölemulsionen auf. Sie können aber auch als wässrige Lösungen vorliegen, die im allgemeinen, zusätzlich zu den Aktivsubstanzen der angegebenen Art, ein nicht-ionisches Tensid, z. B. Aethylenoxydaddukte von einem Alkylphenol enthalten. Als bevorzugte Inhaltsstoffe bzw. Aktivsubstanzen der Entlüftungsmittel seien höhere Alkohole mit Siedepunkten über 100 °C, hochsiedende Terpentinöle, Mineralöle oder deren Gemische erwähnt. Bevorzugt werden als fakultative Komponente des Verdickungsmittels Kohlenwasserstoffgemische eingesetzt, die im allgemeinen einen Flammpunkt über 120 °C, vorzugsweise von 150 bis 220 °C und einen Siedebereich von etwa 250 bis etwa 500 °C (unter Normalbedingungen, bzw. bis höchstens etwa 300 °C unter vermindertem Druck) aufweisen.

Besonders lagerstabile, strukturviskose Wasser-in-Oel Emulsionen des Verdickungsmittels enthalten

15 bis 30 Gewichtsprozent der Polymerisate (A) und (B),

10 bis 30 Gewichtsprozent Paraffinöl,

3 bis 15 Gewichtsprozent Aethanolamide von Fettsäuren, sowie Sorbitanfettsäureester und deren Addukte mit Aethylenoxyd,

5 bis 10 Gewichtsprozent einer wässrigen 25 bis 35 gewichtsprozentigen Natriumhydroxydlösung,

0 bis 2 Gewichtsprozent mindestens eines hochsiedenden Kohlenwasserstoffes der angegebenen Art als Entlüftungsmittel und

10 bis 70 vorzugsweise 13 bis 67 Gewichtsprozent Wasser.

Die erfindungsgemässen Verdickungsmittel werden bei ihrer Verwendung in Druckpasten mit handelsüblichen Farbstofformulierungen vermischt. Hierbei kann aber auch ein in einer bevorzugten Verwendungsart des erfindungsgemässen Verdickungsmittels, ein Verdickungsmittel, das nur die Komponente (A) enthält, zusammen mit einem Verdickungsmittel, das nur die Komponente (B) enthält, mit den Farbstofformulierungen vermischt werden. In Betracht kommen in Druckpasten für den Direktdruck vor allem elektrolytarme Formulierungen von in Wasser unlöslichen bis schwerlöslichen Küpen- oder vor allem Dispersionsfarbstoffe, wie sie z. B. in der deutschen Offenlegungsschrift 2 850 482 beschrieben sind. Es können aber auch salzhaltige Handelsformulierungen von Reaktiv-, Säuren- und/oder Beizenfarbstoffen eingesetzt werden, sofern allfällige, durch die Elektrolyte bewirkte Viskositätsverluste durch Erhöhung der Verdickungsmittelmenge in der Druckpaste kompensiert wird.

Sofern die Druckpasten im Transferdruck eingesetzt werden, sind die in den Formulierungen in Frage kommenden Farbstoffe die üblichen, für das Thermotransferdruckverfahren geeigneten sublimierbaren Dispersionsfarbstoffe, die bei etwa 160 bis etwa 220 °C in den Dampfzustand übergehen, d. h. Farbstoffe, deren Dampfdruck bei z. B. 200 °C höher als $10^{-5}$ bar ist. Sie gehören u. a. der Klasse der Nitrofarbstoffe der Anilinreihe, der Azofarbstoffe der Benzolreihe, sowie der Anthrachinon-, Chinolin-, Pyrazolon-, Triazol-, Pyridon- oder Styrylfarbstoffe an.

Die in den Formulierungen in Frage kommenden Farbstoffe sind in Colour Index, 3. Auflage 1971, in den Rubriken « Reactive dyes », « Acid dyes », « Mordant dyes », « Vat dyes » und « Disperse dyes » beschrieben.

Neben den Farbstofformulierungen und den strukturviskosen Verdickungsmitteln können die Druckpasten gegebenenfalls übliche Zusätze wie z. B. Bindemittel, Entlüftungs- bzw. Antischaummittel, Lösungsmittel, Emulgatoren und Einstellmittel enthalten. Beim Färben und Bedrucken der Fasermaterialien im Direktdruck sind Bindemittel und Entlüftungs- bzw. Entschäumungsmittel fakultative Komponenten der Druckpasten. Wird hingegen die Druckpaste im Transferdruck zum Bedrucken von Zwischenträgern und Fasermaterialien verwendet, so werden Bindemittel und Entlüftungs- bzw. Entschäumungsmittel als zusätzliche Komponenten der Druckpaste stets eingesetzt.

Als Bindemittel kommen filmbildende, handelsübliche Polymere in Betracht, z. B. Copolymerisate aus Acrylsäureestern und Vinylacetaten, die vorzugsweise als Emulsionen eingesetzt werden oder vor allem Cellulosederivate, die als wässrige, klare, d. h. quallenfreie Lösungen vorliegen, die z. B. Hydroxyäthylcellulose oder Methylcellulose als Aktivsubstanzen enthalten. Indessen sind Vinylpolymere, z. B. zu Polyvinylalkoholen hydrolysierte Polyvinylacetate als Aktivsubstanz des Bindemittels bevorzugt. Im Vordergrund des Interesses stehen Polyvinylalkohole eines Molekulargewichtes von $1 \cdot 10^5$ bis $3 \cdot 10^5$ und eines Hydrolysegrades von 80 bis 90, insbesondere 85 bis 90 Mol-%, welche vorzugsweise als wässrige, verdünnte Lösungen eingesetzt werden, die einen Aktivsubstanzgehalt von etwa 10 bis 30 Gewichtsprozent aufweisen.

Als Entlüftungs- bzw. Entschäumungsmittel, Lösungsmittel und Emulgatoren in den Druckpasten sind die vorstehend als fakultative Zusätze des Verdickungsmittels genannten Entlüftungs- oder Entschäumungsmittel, Lösungsmittel und Emulgatoren von praktischer Bedeutung.

Im Vordergrund des Interesses stehen Entlüftungsmittel in den Druckpasten für den Transferdruck, die als Aktivsubstanzen ein Octanol oder dessen Gemisch mit hochsiedendenden Kohlenwasserstoffgemischen enthalten, welches den vorstehend angegebenen Gehalt an Silikonöl aufweist und gegebenenfalls als wässrige Zubereitung vorliegt, wobei diese Zubereitung zusätzlich zu den Aktivsubstanzen Aethylenoxydaddukte von einem Alkylphenol mit 6 bis 12 Kohlenstoffatomen im Alkylrest als Tensid enthält.

Als Beispiele von Vertretern solcher Entlüftungsmittel seien eine wässrige Zubereitung, die
10 bis 15 Gewichtsprozent 2-Aethyl-n-hexanol,
5 bis 10 Gewichtsprozent eines Silikonöles,
15 bis 25 Gewichtsprozent eines Adduktes aus 2 bis 9 Mol Aethylenoxyd und 1 Mol p-Nonylphenol und
50 bis 70 Gewichtsprozent Wasser
enthält, oder insbesondere ein wasserfreies Gemisch aus
67 bis 89 Gewichtsprozent 2-Aethyl-n-hexanol,
10 bis 30 Gewichtsprozent eines Kohlenwasserstoffgemisches eines Siedebereiches von 300 bis 500 °C, und
1 bis 3 Gewichtsprozent eines Silikonöles
genannt.

Lackbenzin als Lösungsmittel und Alkylenoxydaddukte von Fettalkoholen, z. B. Aethylenoxydaddukte des Oleylalkohols als Oel-in-Wasser Emulgatoren sind als fakultative Zusätze von Druckpasten sowohl in Transferdruck als auch im Direktdruck besonders bevorzugt. Als weiterer fakultativer Zusatz in den Druckpasten kommen anorganische Einstellmittel, z. B. Mineralsalze wie Natriumchlorid, -sulfat, -hydrogensulfat, -carbonat, Mono-, Di- oder Trinatriumphosphat, oder auch übliche organische Einstellmittel, z. B. Zucker, Dextrin und vor allem Harnstoff in Betracht. Bevorzugte Druckpasten, die ein wasserunlösliches Lösungsmittel enthalten, liegen in der Regel als strukturviskose Oelin-Wasser Emulsion vor.

Die im Vordergrund des Interesses stehenden strukturviskosen Druckpasten enthalten

0,1 bis 15 Gewichtsprozent einer Farbstoffformulierung,
1 bis 25 Gewichtsprozent des Verdickungsmittels,
0 bis 20 Gewichtsprozent des Bindemittels,
0 bis 5 Gewichtsprozent des Antischaummittels,
0 bis 20 Gewichtsprozent des wasserunlöslichen Lösungsmittels,
0 bis 0,5 Gewichtsprozent des Emulgiermittels und
14,5 bis 98,9 Gewichtsprozent Wasser.

Insbesondere enthalten Druckpasten für den Transferdruck

0,1 bis 15 Gewichtsprozent einer Farbstoffformulierung,
5 bis 25 Gewichtsprozent des Verdickungsmittels,
3 bis 5 Gewichtsprozent des Bindemittels,
0,5 bis 1 Gewichtsprozent des Antischaummittels,
0 bis 20 Gewichtsprozent des wasserunlöslichen Lösungsmittels,
0 bis 0,5 Gewichtsprozent des Emulgiermittels und
33,5 bis 91,4 Gewichtsprozent Wasser

und Druckpasten für den Direktdruck

0,1 bis 15 Gewichtsprozent einer Farbstoffformulierung,
1 bis 25 Gewichtsprozent des Verdickungsmittels,
0 bis 5 Gewichtsprozent eines Bindemittels,
0 bis 1 Gewichtsprozent des Antischaummittels,
0 bis 20 Gewichtsprozent des wasserunlöslichen Lösungsmittels,
0 bis 0,5 Gewichtsprozent des Emulgiermittels und
33,5 bis 98,9 Gewichtsprozent Wasser.

Falls das Verdickungsmittel in seiner bevorzugten Ausführungsform als Wasser-in-Oel Emulsion vorliegt, werden vorzugsweise 3 bis 25 Gewichtsprozent dieses Verdickungsmittels in der Druckpaste eingesetzt. Bei den elektrolytarmen, bevorzugten Farbstofformulierungen der vorstehend angegebenen Art werden vorzugsweise 3 bis 15, insbesondere 5 bis 12 Gewichtsprozent des emulgierten Verdickungsmittels in der Druckpaste eingesetzt. Höhere Mengen an emulgierte Verdickungsmittel, bis z. B. 25 Gewichtsprozent, werden vor allem bei elektrolythaltigen Farbstofformulierungen eingesetzt. Vor ihrem Einsatz in den Druckpasten werden bevorzugte Wasser-in-Oel Emulsionen des Verdickungsmittels mit dem zur Herstellung der Druckpaste verwendeten Wasser vorgängig vermischt um in Stammansätzen, d. h. in den sogenannten Stammverdickungen, eine Phaseninversion von Wasser-in-Oel zu Oel-in-Wasser zu bewerkstelligen.

Beim Bedrucken der Fasermaterialien mit den Druckpasten der vorstehend angegebenen Art, welche das erfindungsgemässe Verdickungsmittel enthalten, wird die Druckpaste ganzflächig, oder vorzugsweise stellenweise direkt auf das Fasermaterial oder auf einen Zwischenträger, zur Anwendung im sogenannten Transferdruckverfahren, aufgebracht, wobei Druckmaschinen üblicher Bauart, z. B. Tiefdruck-, Rotationssiebdruck- und Flachfilmdruckmaschinen zweckmässig eingesetzt werden.

Das im Transferdruckverfahren eingesetzte Zwischenträger ist zweckmässig ein flexibles, vorzugsweise räumlich stabiles Band, ein Streifen oder eine Folie mit vorteilhaft glatter Oberfläche, welche hitzestabil und inert sind, d. h. keinerlei Affinität zu den verschiedenen Komponenten der Druckpasten aufweisen und aus verschiedensten Arten von Materialien bestehen, z. B. Metall, wie eine Aluminium- oder Stahlfolie ; Kunststoff ; Papier oder textile Flächengebilde, die gegebenenfalls mit einem Film aus Vinylharz, Aethylcellulose oder Polyurethanharz beschichtet sein können. Zweckmässig verwendet man flexible Folien aus Aluminium oder, wegen des niedrigen Gestehungspreises, vor allem Papier.

Nach dem Bedrucken wird das Fasermaterial nach üblichen Methoden fertiggestellt.

So wird im Direktdruckverfahren das Fasermaterial nach dem Bedrucken bei Temperaturen bis 150 °C, vorzugsweise 80° bis 120 °C getrocknet. Anschliessend werden die Farbstoffe auf dem Material fixiert. Dieses Fixieren wird durch eine Wärmebehandlung des Materials bei Temperaturen von vorzugsweise 100° bis 220 °C gegebenenfalls unter Anwendung eines Ueberdrucks erzielt. Diese Wärmebehandlung kann entweder in Abwesenheit von Feuchtigkeit mit Heissluft unter atmosphärischem Druck bei z. B. 180° bis 220 °C oder insbesondere mit Wasserdampf durchgeführt werden. Die Wärmebehandlung mit Wasserdampf wird im allgemeinen mit gesättigtem Wasserdampf bei z. B. 100 bis 140 °C, gegebenenfalls unter Druck, oder mit überhitztem Dampf bei etwa 150° bis 200 °C unter atmosphärischem Druck durchgeführt.

Vor allem bei unvollständiger Fixierung der Farbstoffe auf dem Material hat es sich vorteilhaft erwiesen, das Material einer Nachwäsche in Gegenwart eines Tensides und/oder einer reduktiven Nachbehandlung zu unterwerfen, um nicht fixierte Farbstoffe in Form ihrer Zersetzungsprodukte besser durch eine nachgeschaltete Waschoperation eliminieren zu können, die in der Regel stets durch ein kaltes und hierauf ein heisses und wiederum kaltes Spülen des Materials erfolgt.

Im Allgemeinen wird diese Nachwäsche, bzw. diese reduktive Nachbehandlung bei 30° bis 90 °C, vorzugsweise 50° bis 70 °C während etwa 2 bis 30 Minuten durchgeführt. Als Tenside kommen z. B. Alkylenoxydaddukte von Alkylphenolen in Betracht. Als Reduktionsmittel kommen vor allem Sulfite, Sulfoxylate und insbesondere Dithionite in Betracht, vorzugsweise in Form ihrer Alkalimetall-, insbesondere Natriumsalze. In der Regel genügt eine Konzentration dieser Tenside oder Reduktionsmittel in der

wässrigen Nachbehandlungslösung von 1 bis 6 g/l. Die Nachbehandlung wird vorzugsweise unter neutralen bis alkalischen Bedingungen durchgeführt.

Eine Nachbehandlung des bedruckten Fasermaterials mit einem vorzugsweise halogenierten Lösungsmittel, z. B. Perchloräthylen, vorzugsweise bei 20 bis 50 °C, ist auch möglich.

Im Transferdruckverfahren wird hingegen der Zwischenträger bei vorzugsweise 80 bis 140 °C, insbesondere 100 bis 120 °C während etwa 5 bis 20 Sekunden getrocknet. Zum Färben und Bedrucken des Fasermaterials wird anschliessend der Zwischenträger mit dem Fasermaterial in Kontakt gebracht und z. B. in einer Bügelpresse oder Kalander unter Anwendung von Druck einer Wärmbehandlung vorzugsweise bei 120 bis 220 °C vor allem 190 bis 220 °C, insbesondere 190 bis 210 °C während 5 bis 90, vor allem 20 bis 90, insbesondere 20 bis 60 Sekunden unterworfen, wobei der Farbstoff vom Zwischenträger auf das Fasermaterial transferiert.

Nach beendeter Wärmebehandlung wird das bedruckte Fasermaterial vom Zwischenträger getrennt. Das so bedruckte Fasermaterial bedarf in der Regel keiner Nachbehandlung, d. h. im allgemeinen weder einer Dampfbehandlung, um den Farbstoff zu fixieren, noch eines Waschens, um die Echtheiten zu verbessern.

Bei den zu bedruckenden Fasermaterialien handelt es sich in der Regel um Textilmaterialien, vorzugsweise um flächenförmige Gebilde wie Vliese, Filze, vor allem Teppiche, Gewirke und insbesondere Gewebe. Hierbei kommen Textilmaterialien aus halbsynthetischen und insbesondere vollsynthetische Fasern, oder, sofern das Textilmaterial im Direktdruck gefärbt und bedruckt wird, auch Textilmaterialien aus natürlichen Fasern in Betracht. Auch Gemische der erwähnten Fasern kommen in Frage. Bei den halbsynthetischen Fasern handelt es sich hauptsächlich um regenerierte Cellulosefasern, z. B. Viskosefasern und vor allem Acetatfasern (2 1/2- und Triacetat) und bei den vollsynthetischen Fasern hauptsächlich um Polyacrylnitril-, Polyamid- und insbesondere Polyesterfasern. Da die halb- und vor allem vollsynthetischen Fasern der angegebenen Art sowohl im Transferdruck als auch im Direktdruck bedruckt und gefärbt werden können, sind sie den natürlichen Fasern gegenüber bevorzugt. Bei den im Direktdruck zu färbenden, natürlichen Fasern handelt es sich hauptsächlich um Keratinfasern, z. B. Seide- oder vorzugsweise Wollfasern, oder um Cellulosefasern, z. B. Baumwollfasern. Woll- und vor allem Baumwollgewebe und insbesondere Mischgewebe aus Polyester und Baumwolle oder vorzugsweise aus Polyester und Wolle sind besonders geeignet, nach dem erfindungsgemässen Verfahren im Direktdruck bedruckt zu werden. Auch Mischgewebe aus Triacetat und Polyamid sind geeignet, nach dem erfindungsgemässen Verfahren sowohl im Transferdruck als auch im Direktdruck bedruckt zu werden. Indessen stehen vollsynthetische Gewebe aus Polyacrylnitril, Triacetat oder vor allem Polyester oder deren Gemische oder vor allem Gewebe aus reinem Polyacrylnitril oder insbesondere aus reinem Polyester im Vordergrund des Interesses.

Der Einsatz des Gemisches des Komponenten (A) und (B) der vorstehend angegebenen Art im erfindungsgemässen Verdickungsmittel bietet bei den daraus hergestellten Druckpasten die folgenden unvorhersehbaren Vorteile :

gute Beständigkeit der Druckpaste, wie eingangs bereits erwähnt, gegen hohe und langwirkende Scherkräfte

gute Standschärfe der auf dem Textilmaterial und gegebenenfalls auf dem Zwischenträger erhaltenen Musterungen beim stellenweisen Bedrucken der Druckpaste

gute Penetration der Druckpaste in das Textilmaterial im Direktdruck

gute Reibechtheit und Lagerhaltbarkeit der im Transferdruck bedruckten Zwischenträger

gute Transferierbarkeit der Farbstoffe aus der Druckpaste vom Zwischenträger auf das Textilmaterial im Transferdruck

egale Musterungen mit äusserst scharfen Konturen auf dem Textilmaterial beim stellenweise Bedrucken der Druckpaste

gute Rührbarkeit und Pumpbarkeit der Druckpasten bzw. gute Zügigkeit von hochkonzentrierten Stammansätzen der Verdickungsmittel dank ihrem relativ niedrigen Fliessindex

relativ niedrige Elektrolytempfindlichkiet, die den Einsatz sowohl von salzhaltigen Farbstofformulierungen zum Bedrucken von natürlichen Fasern als auch von elektrolytarmen Farbstofformulierungen zum Bedrucken von synthetischen Fasern gestattet

mögliche Beeinflussung der Standschärfe und Penetration durch Variationen der Gewichtsverhältnisse der Komponenten (A) und (B)

gute Weichgriffeigenschaften des bedruckten Textilmaterials dank dem Transferdruck oder dank der im Direktdruck ermöglichten kleinen Einsatzmenge des Verdickungsmittels und dessen gute Auswaschbarkeit.

Die in den nachfolgenden Beispielen angegebenen Prozente beziehen sich auf das Gewicht.

## Beispiel 1

Eine als Oel-in-Wasser vorliegende, strukturviskose Druckpaste, die

15 g/kg einer elektrolytarmen, dispergierten Handelsformulierung des roten Dispersionsfarbstoffes der Formel

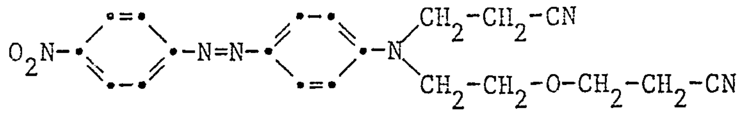

(1)

50 g/kg eines als Wasser-in-Oel Emulsion vorliegenden Verdickungsmittels aus

20,0 % eines mit Triallylisocyanurat vernetzten Copolymerisates aus 1 Mol Acrylsäure und 1 Mol Acrylamid, das ein Molekulargewicht von 2 bis 3 Millionen aufweist,

3,0 % einer Polyacrylsäure, die ein Molekulargewicht von 700 000 bis 900 000 aufweist,

1,4 % eines Wasser-in-Oel Emulgators (Sorbitanmonooleat)

3,6 % eines Oel-in-Wasser Emulgators (Gemisch 2 : 1 eines Aethanolamids von Fettsäuren und eines Adduktes aus Sorbitanmonooleat und 80 Mol Aethylenoxyd),

18,8 % Paraffinol (Siedebereich : 188 bis 206 °C, Flammpunkt : 60 °C),

45,8 % entionisiertem Wasser,

0,4 % eines hochsiedenden Kohlenwasserstoffgemisches als Entlüftungsmittel (Siedebereich : 270 bis 300 °C, Flammpunkt : ca. 160 °C),

7,0 % einer 30 %igen, wässrigen Natriumhydroxydlösung

und

935 g/kg entionisiertes Wasser

enthält und einen pH-Wert von 6,3 und eine apparente Viskosität (Scheinviskosität), gemessen am Brookfield-Viskosimeter RVT mit Spindel 6 bei 20 °C und Umdrehungen/Minute, von 17 000 mPa · s aufweist, wird mittels einer Filmdruckmaschine stellenweise auf ein Polyestergewebe gedruckt.

Das bedruckte Gewebe wird bei 100 °C getrocknet, dann einer Wärmebehandlung mit überhitztem Wasserdampf bei 180 °C während 6 Minuten und hierauf einer reduktiven Nachbehandlung mit einer wässrigen Lösung, die 4 g/l Natriumdithionit und 4 g/l einer wässrigen, 30 %igen Natriumhydroxyd-Lösung während 10 Minuten bei 60 °C unterworfen und schliesslich heiss und kalt nachgespült und getrocknet.

Man erhält einen farbstarken, musterförmigen roten Druck auf weissem Grund mit ausgezeichneter Egalität, Standschärfe und Echtheiten (Licht-, Nass- und Reibechtheit). Zudem weist das bedruckte Gewebe einen weichen Griff auf.

## Beispiel 2

Eine als Oel-in-Wasser vorliegende, strukturviskose Druckpaste, die

40 g/kg einer elektrolytarmen, dispergierten Handelsformulierung des blauen Dispersionsfarbstoffes der Formel

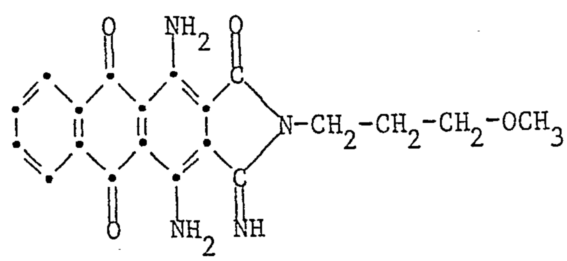

(2)

50 g/kg des in Beispiel 1 angegebenen Verdickungsmittels

und

910 g/kg entionisiertes Wasser

enthält und einen pH-Wert von 6,3 und eine gemäss Beispiel 1 gemessene, apparente Viskosität von 15 200 mPa · s aufweist, wird mittels einer Filmdruckmaschine stellenweise auf ein Triacetatgewebe gedruckt.

Das bedruckte Gewebe wird bei 100 °C getrocknet, dann einer Wärmebehandlung mit überhitztem Wasserdampf bei 190 °C während 7 Minuten unterworfen. Die reduktive Nachbehandlung sowie das Nachspülen und Trocknen des Gewebes wird anschliessend wie in Beispiel 1 angegeben durchgeführt.

Man erhält einen farbtiefen, leuchtenden musterförmigen, blauen Druck auf weissem Grund mit guter Egalität und Standschärfe und guten Echtheiten. Zudem weist das bedruckte Gewebe einen weichen Griff auf.

## Beispiel 3

Eine als Oel-in-Wasser vorliegende, strukturviskose Druckpaste, die

30 g/kg einer elektrolytarmen, dispergierten Handelsformulierung des gelben Dispersionsfarbstoffes der Formel

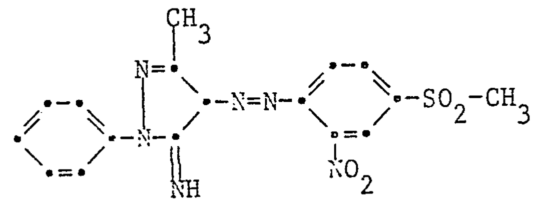

(3)

10 g/kg einer salzhaltigen Handelsformulierung des gelben Reaktivfarbstoffes der Formel

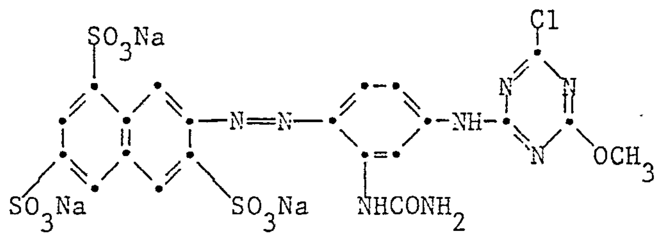

(4)

80 g/kg eines als Wasser-in-Oel Emulsion vorliegenden Verdickungsmittels aus
20,3 % des in Beispiel 1 angegebenen Acrylsäure-Acrylamid-Copolymerisates,
2,8 % der in Beispiel 1 angegebenen Polyacrylsäure,
1,3 % Sorbitan-Monooleat,
3,6 % Gemisch 2,2 : 1 eines Fettsäureäthanolamides und eines Adduktes aus Sorbitan-Monooleat und 80 Mol Aethylenoxyd,
18,6 % des in Beispiel 1 angegebenen Paraffinöls,
46,1 % entionisiertem Wasser,
0,4 % des in Beispiel 1 angegebenen Entlüftungsmittels und
6,9 % einer 30 %igen, wässrigen Natriumhydroxydlösung
und
880 kg/g Wasser
enthält und welche einen pH-Wert von 6,2 und eine gemäss Beispiel 1 gemessene, apparente Viskosität von 13 500 mPa · s aufweist, wird mittels einer Filmdruckmaschine stellenweise auf ein Mischgewebe aus Polyester und Wolle (85 : 15) gedruckt.

Das bedruckte Gewebe wird bei 90 °C getrocknet, dann einer Wärmebehandlung mit überhitztem Wasserdampf bei 175 °C während 8 Minuten unterworfen, hierauf kalt gespült und mit einer wässrigen, nichtionischen Tensidlösung, die 4 kg/l eines Adduktes aus p-Nonylphenol und 9 Mol Aethylenoxyd enthält, während 10 Minuten bei 60 °C nachgewaschen. Nach dem Trocknen des Gewebes erhält man einen farbstarken, musterförmigen gelben Druck auf weissem Grund mit guter Egalität und Standschärfe und guten Echtheiten. Zudem weist das bedruckte Gewebe einen weichen Griff auf.

Beispiel 4

Eine als Oel-in-Wasser vorliegende, strukturviskose Druckpaste, die
30 kg/g einer elektrolytarmen, dispergierten Handelsformulierung des violetten Dispersionsfarbstoffes der Formel

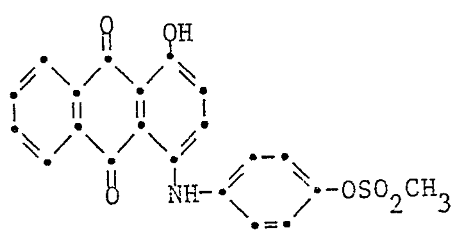

(5)

50 kg/g des in Beispiel 1 angegebenen Verdickungsmittels
und
920 g/kg entionisiertes Wasser
enthält und einen pH-Wert von 6,2 und eine wie in Beispiel 1 gemessene, apparente Viskosität von 15 800 mPa · s aufweist, wird mittels einer Filmdruckmaschine stellenweise auf ein Polyestergewebe gedruckt.

Das bedruckte Gewebe wird bei 100 °C getrocknet, dann einer Wärmebehandlung mit überhitztem Wasserdampf bei 175 °C während 8 Minuten unterworfen und hierauf mit Perchloräthylen bei 35 °C während 10 Minuten nachgewaschen.

Man erhält einen farbtiefen, violetten musterförmigen Druck auf weissem Grund mit ausgezeichneter Egalität, guter Standschärfe und guten Echtheiten. Zudem weist das bedruckte Gewebe einen weichen Griff auf.

## Beispiel 5

Eine als Oel-in-Wasser vorliegende, strukturviskose Druckpaste, die

3,5 g/kg einer elektrolytarmen, dispergierten Handelsformulierung des scharlachfarbenen Dispersionsfarbstoffes der Formel

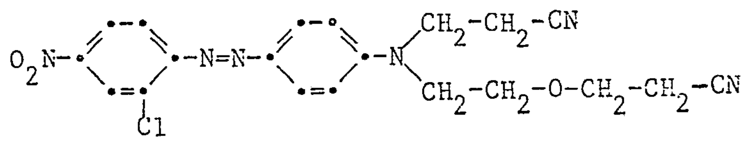

(6)

50 g/kg des in Beispiel 1 angegebenen Verdickungsmittels

und

947,5 g/kg entionisiertes Wasser

enthält und einen pH-Wert von 6,3 und eine gemäss Beispiel 1 gemessene apparente Viskosität von 17 500 mPa · s aufweist wird mittels einer Filmdruckmaschine stellenweise auf ein Mischgewebe aus Polyester und Baumwolle (80 : 20) gedruckt.

Das bedruckte Gewebe wird bei 100 °C getrocknet, dann einer Wärmebehandlung mit gesättigtem Wasserdampf bei 130 °C und einem Druck von 2 bar während 20 Minuten unterworfen, und hierauf kalt nachgespült. Anschliessend wird eine reduktive Nachbehandlung des gedruckten Gewebes, wie in Beispiel 1 angegeben, durchgeführt.

Nach dem Trocknen des Gewebes erhält man einen scharlachfarbenen Druck mit guter Standschärfe und Egalität und guten Echtheiten. Zudem weist das bedruckte Gewebe einen weichen Griff auf.

## Beispiel 6

Eine als Oel-in-Wasser vorliegende, strukturviskose Druckpaste, die

100 g/kg einer elektrolytarmen, dispergierten Handelsformulierung des roten Dispersionsfarbstoffes der Formel

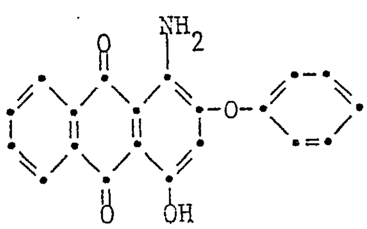

(7)

40 g/kg des in Beispiel 1 angegebenen Verdickungsmittels

150 g/kg einer 20 %igen, wässrigen Lösung als Bindemittel aus einem zu Polyvinylalkohol hydrolysierten Polyvinylacetat, dass ein Molekulargewicht von ca. 20 000, ein Hydrolysegrad von ca. 88 Mol-%, eine Esterzahl von ca. 140, einen Restacetylgehalt von ca. 15 % und ein Polymerisationsgrad von ca. 530 aufweist,

5 g/kg eines Gemisches als Entlüftungsmittel aus

80 % 2-Aethyl-n-hexanol,

18 % eines Kohlenwasserstoffgemisches aus 63 % Paraffinen, 29 % Naphthenen und 8 % Aromaten eines Siedebereiches von 340 bis 470 °C und eines Flammpunktes von ca. 200 °C,

2 % eines Silikonöls und

705 g/kg entionisiertes Wasser

enthält und einen pH-Wert von 6,1 und eine gemäss Beispiel 1 gemessene, apparente Viskosität von 13 500 mPa · s aufweist, wird stellenweise auf einen Zwischenträger aus Papier gedruckt. Der bedruckte Zwischenträger wird bei 100 °C während 8 Sekunden getrocknet. Er ist lagerfähig und reibecht.

Nun wird im Transferdruckverfahren die bedruckte Seite des Zwischenträgers mit einem Polyestergewebe eines Flächengewichtes von 100 g/m² in Kontakt gebracht, hierauf der Zwischenträger und das Gewebe während 30 Sekunden bei 210 °C in einem Kalander zusammengepresst, wobei der Farbstoff vom Zwischenträger auf das Gewebe im Umdruckverfahren transferiert.

Man erhält auf dem Polyestergewebe, das einen weichen Griff aufweist einen roten, musterförmigen Druck mit scharfen Konturen auf weissem Grund mit guter Standschärfe und Egalität und guten Echtheiten.

Beispiel 7

Eine als Oel-in-Wasser vorliegende, strukturviskose Druckpaste, die

30 g/kg einer elektrolytarmen, dispergierten Handelsformulierung des blauen Dispersionsfarbstoffes der Formel (2)

40 g/kg eines als Wasser-in-Oel Emulsion vorliegenden Verdickungsmittels aus

18,75 % des in Beispiel 1 angegebenen Acrylsäure-Acrylamid-Copolymerisates,

3,75 % der in Beispiel 1 angegebenen Polyacrylsäure

1,63 % Sorbitan-Monooleat,

3,75 % Gemisch 1,5 : 1 eines Fettsäurealkanolamides und eines Adduktes aus Sorbitan-Monooleat und 80 Mol Aethylenoxyd,

19,50 % des in Beispiel 1 angegebenen Paraffinöl,

45,12 % entionisiertem Wasser

0,50 % des in Beispiel 1 angegebenen Entlüftungsmittel

7,00 % einer 30 %igen, wässrigen Natriumhydroxydlösung,

2 g/kg eines Adduktes aus Oleylalkohol und 80 Mol Aethylenoxyd,

200 g/kg Lackbenzin,

50 g/kg Harnstoff

und

678 g/kg entionisiertes Wasser

enthält und einen pH-Wert von 6,4 und eine gemäss Beispiel 1 gemessene, apparente Viskosität von 15 000 mPa · s aufweist, wird mittels einer Flachfilmdruckmaschine stellenweise auf ein Mischgewebe aus Triacetat und Polyamid (75 : 25) gedruckt.

Das bedruckte Gewebe wird bei 100 °C getrocknet und in einer Presse mit heizbaren Platten einer Wärmebehandlung während 60 Sekunden bei 210 °C unterworfen. Anschliessend wird das Gewebe kalt gespült, mit einer wässrigen nichtionischen Tensidlösung, die 4 g/l eines Adduktes des p-Nonylphenol und 9 Mol Aethylenoxyd enthält, während 10 Minuten bei 60 °C nachgewaschen und wiederum kalt gespült und hierauf getrocknet.

Man erhält einen kräftigen, blauen, musterförmigen Druck auf weissem Grund mit guter Standschärfe und Egalität und guten Echtheiten. Zudem weist das bedruckte Gewebe einen weichen Griff auf.

Beispiel 8

Eine als Oel-in-Wasser vorliegende, strukturviskose Druckpaste, die

2 g/kg einer elektrolytarmen, dispergierten Handelsformulierung des rosafarbenen Dispersionsfarbstoffes der Formel

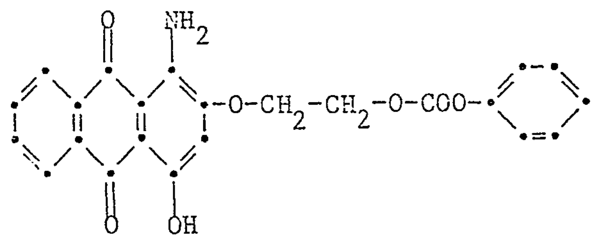

(8)

50 g/kg des in Beispiel 1 angegeben Verdickungsmittels

und

948 g/kg entionisiertes Wasser

enthält und einen pH-Wert von 6,2 und eine gemäss Beispiel 1 gemessene, apparente Viskosität von 18 000 mPa · s aufweist, wird stellenweise auf ein Mischgewebe aus Polyester und Baumwolle (67 : 33) gedruckt.

Das bedruckte Gewebe wird bei 100 °C getrocknet und einer Wärmebehandlung mittels Heissluft bei 210 °C während 1 Minute unterworfen.

Man erhält einen rosafarbenen Druck auf weissem Grund mit guter Standschärfe und Egalität und guten Echtheiten. Zudem weist das bedruckte Mischgewebe einen weichen Griff auf.

Beispiel 9

Eine als Oel-in-Wasser vorliegende, strukturviskose Druckpase, die

100 g/kg einer elektrolytarmen, dispergierten Handelsformulierung des blauen Dispersionsfarbstoffes der Formel

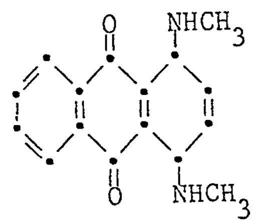

(9)

40 g/kg des in Beispiel 1 angegebenen Verdickungsmittels,
25 g/kg des in Beispiel 6 angegebenen Bindemittels,
5 g/kg des in Beispiel 6 angegebenen Entlüftungsmittels
und
830 g/kg entionisiertes Wasser
enthält und einen pH-Wert und 6,3 und eine gemäss Beispiel 1 gemessene, apparente Viskosität von 12 000 mPa · s aufweist wird stellenweise auf einen Zwischenträger aus Papier gedruckt.

Der bedruckte Zwischenträger wird bei 120 °C während 8 Sekunden getrocknet. Er ist lagerfähig und reibecht.

Nun wird im Transferdruckverfahren die bedruckte Seite des Zwischenträgers mit einem Polyacrylnitrilgewebe in Kontakt gebracht und hierauf der Zwischenträger und das Gewebe während 30 Sekunden bei 210 °C in einem Kalander zusammengepresst, wobei der Farbstoff vom Zwischenträger auf das Gewebe im Umdruckverfahren transferiert.

Man erhält auf dem Polyacrylnitrilgewebe, das einen weichen Griff aufweist, einen kräftigen, blauen, musterförmigen Druck mit scharfen Konturen auf weissen Grund mit guter Standschärfe und Egalität und guten Echtheiten.

## Beispiel 10

Eine als Oel-in-Wasser vorliegende, strukturviskose Druckpaste, die
15 g/kg einer elektrolytarmen, dispergierten Handelsformulierung des roten Dispersionsfarbstoffes der Formel (1)
40 g/kg eines als Wasser-in-Oel Emulsion vorliegenden Verdickungsmittels aus
25,0 % eines mit Triallylisocyanurat vernetzten Copolymerisates aus 1 Mol Acrylsäure und 1 Mol Acrylamid, das ein Molekulargewicht von 2 bis 3 Millionen aufweist,
0,5 % eines Wasser-in-Oel Emulgators (Sorbitanmonooleat),
3,0 % eines Oel-in-Wasser Emulgators (Aethanolamid von Fettsäuren),
16 % Paraffinol (Siedebereich : 188 bis 206 °C, Flammpunkt : 60 °C),
48,8 % entionisiertem Wasser,
6,7 % einer 30 %igen, wässrigen Natriumhydroxydlösung,
10 g/kg eines als Wasser-in-Oelemulsion vorliegenden Verdickungsmittels
aus
15 % einer Polyacrylsäure, die ein Molekulargewicht von 700 000 bis 900 000 aufweist,
5 % eines Wasser-in-Oel Emulgators (Sorbitanmonooleat)
6 % eines Oel-in-Wasser Emulgators (Addukt aus Sorbitanmonooleat und 80 Mol Aethylenoxyd),
30 % Paraffinöl (Siedebereich : 188 bis 206 °C, Flammpunkt : 60 °C),
34 % entionisiertem Wasser,
2 % eines hochsiedenden Kohlenwasserstoffes als Entschäumungsmittels (Siedebereich : 270 bis 300 °C, Flammpunkt : ca. 160 °C)
8 % einer 30 %igen, wässrigen Natriumhydroxydlösung
und
935 g/kg entionisiertes Wasser
enthält und einen pH-Wert von 6,2 und eine gemäss Beispiel 1 apparente Viskosität von 17 500 mPa · s aufweist, wird mittels einer Filmdruckmaschine stellenweise auf ein Polyestergewebe gedruckt.

Das bedruckte Gewebe wird bei 100 °C getrocknet, dann einer Wärmebehandlung mit überhitztem Wasserdampf bei 180 °C während 8 Minuten und hierauf einer reduktiven Nachbehandlung mit einer wässrigen Lösung, die 3 g/l Natriumdithionit und 3 g/l einer wässrigen, 30 %igen Natriumhydroxyd-Lösung während 15 Minuten bei 60 °C unterworfen und schliesslich heiss und kalt nachgespült und getrocknet. Man erhält einen farbstarken, musterförmigen roten Druck auf weissem Grund mit ausgezeichneter Egalität und Standschärfe und guten Echtheiten, wobei das bedruckte Gewebe einen weichen Griff aufweist.

## Beispiel 11

Eine Druckpaste aus
40 g/kg einer elektrolytarmen, dispergierten Handelsformulierung des marine-blauen

Dispersionsfarbstoffes der Formel

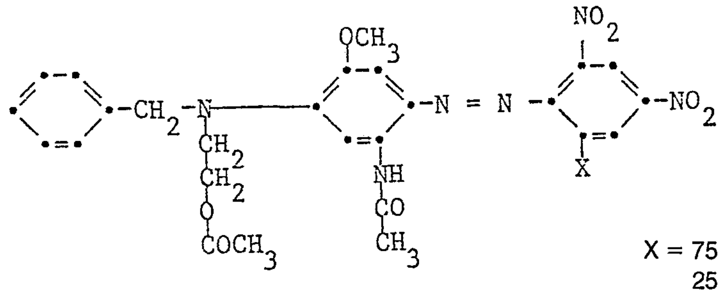

(8)

X = 75 % Cl
25 % H

4,12 g/kg der in Beispiel 10 angegebenen Wasser-in-Oel Emulsion, die 25 % Copolymerisat aus Acrylsäure und Acrylamid als Verdickungsmittel enthält,

45,88 g/kg der in Beispiel 10 angegebenen Wasser-in-Oel Emulsion, die 15 % Polyacrylsäure als Verdickungsmittel enthält und

910 g/kg entionisiertem Wasser

wird durch Zugabe einer wässrigen, 30 %igen Natriumhydroxydlösung auf den pH-Wert von 6,7 gestellt. Die als Oel-in-Wasser vorliegende, strukturviskose Druckpaste, die eine gemäss Beispiel 1 gemessene apparente Viskosität von 5 500 mPa · s aufweist, wird mittels einer Filmdruckmaschine stellenweise auf ein Polyestergewebe gedruckt. Das bedruckte Gewebe wird bei 100 °C getrocknet, dann einer Wärmebehandlung mit überhitztem Dampf bei 180 °C während 8 Minuten und hierauf, nach einem Spülen mit kaltem Wasser, einer reduktiven Nachbehandlung mit einer wässrigen Lösung, die 4 g/l Natriumdithionit und 4 g/l einer wässrigen, 30 %igen Natriumhydroxyd-Lösung während 10 Minuten bei 60 °C unterworfen und schliesslich heiss und kalt nachgespült und getrocknet.

Man erhält einen farbstarken, musterförmigen, marine-blauen Druck auf weissem Grund mit guter Egalität und Standschärfe und guten Echtheiten (Licht-, Nass- und Reibechtheit). Zudem weist das bedruckte Gewebe einen weichen Griff auf.

Beispiel 12

Eine als Oel-in-Wasser vorliegende, strukturviskose Druckpaste, aus

40 g/kg der in Beispiel 11 angegebenen Farbstofformulierung

45 g/kg der in Beispiel 10 angegebenen Wasser-in-Oel Emulsion, die 25 % Copolymerisat aus Acrylsäure und Acrylamid als Verdickungsmittel enthält,

2,5 g/kg der in Beispiel 10 angegebenen Wasser-in-Oel Emulsion, die 15 % Polyacrylsäure als Verdickungsmittel enthält und

912,5 g/kg entionisiertem Wassern,

welche einen pH-Wert von 6,9 und eine gemäss Beispiel 1 gemessene apparente Viskosität von 21 000 mPa · s aufweist, wird mittels einer Filmdruckmaschine stellenweise auf ein Polyestergewebe gedruckt. Das bedruckte Gewebe wird wie in Beispiel 1 angegeben getrocknet, fixiert und nachbehandelt.

Man erhält einen farbstarken, musterförmigen marine-blauen Druck auf weissem Grund mit guter Egalität, Standschärfe und guten Echtheiten. Zudem weist das bedruckte Gewebe einen weichen Griff auf.

**Patentansprüche**

1. Verdickungsmittel, dadurch gekennzeichnet, dass es

(A) ein mindestens teilweise vernetztes Copolymerisat aus Acrylsäure und Acrylamid, welches ein Molverhältnis Acrylsäure : Acrylamid von 1 : 0,9 bis 1 : 1,1 und ein Molekulargewicht von $1 \cdot 10^6$ bis $6 \cdot 10^6$ aufweist,

und

(B) eine Polyacrylsäure, welche ein Molekulargewicht von $6 \cdot 10^5$ bis $1 \cdot 10^6$ aufweist,

enthält.

2. Verdickungsmittel nach Anspruch 1, dadurch gekennzeichnet, dass es als Komponenten (A) und (B) ein Copolymerisat aus Acrylsäure und Acrylamid und Polyacrylsäure enthält, welche in wässrigem Medium strukturviskos sind.

3. Verdickungsmittel nach einem der Ansprüche 1 oder 2, dadurch gekennzeichnet, dass es das Copolymerisat als Komponente (A) und Polyacrylsäure als Komponente (B) im Gewichtsverhältnis (A) : (B) von 0,15 : 1 bis 30 : 1, vorzugsweise 5 : 1 bis 8 : 1, enthält.

4. Verdickungsmittel nach einem der Ansprüche 1 bis 3, dadurch gekennzeichnet, dass es als Wasser-in-Oel Emulsion vorliegt, die zusätzlich zu den Polymerisaten (A) und (B) ein wasserunlösliches Lösungsmittel, vorzugsweise Kohlenwasserstoffe, Emulgatoren, vorzugsweise Alkanolamide höhermolekularer Fettsäuren oder Ester aus Polyalkoholen und höhermolekularen Fettsäuren und deren Addukte mit Alkylenoxyden, ein Neutralisationsmittel, vorzugsweise Ammoniak, Alkanolamine oder Alkalimetallhydroxyde und gegebenenfalls ein Entschäumngs- oder Entlüftungsmittel enthält, wobei das Verdickungsmittel nach Vermischen mit Wasser im Verhältnis 1 : 10 bis 1 : 20 einen bevorzugten pH-Wert von 5,8 bis 9 aufweist.

5. Verdickungsmittel nach Anspruch 4, dadurch gekennzeichnet, dass es
15 bis 30 Gewichtsprozent der Polymerisate (A) und (B),
10 bis 30 Gewichtsprozent Paraffinöl,
3 bis 15 Gewichtsprozent Aethanolamide von Fettsäuren, Sorbitanfettsäureester und deren Addukte mit Aethylenoxyd,
5 bis 10 Gewichtsprozent einer wässrigen, 25 bis 35 gewichtsprozentigen Natriumhydroxydlösung,
0 bis 2 Gewichtsprozent eines hochsiedenden Kohlenwasserstoffes als Entlüftungsmittel und
13 bis 67 Gewichtsprozent Wasser
enthält.

6. Verwendung des Verdickungsmittels gemäss einem der Ansprüche 1 bis 5 in wässrigen Druckpasten zum Färben und Bedrucken von Fasermaterialien.

7. Verfahren zum Färben und Bedrucken von Fasermaterialien unter Verwendung von wässrigen Druckpasten aus Farbstofformulierungen, dadurch gekennzeichnet, dass die Druckpaste das Verdickungsmittel gemäss einem der Ansprüche 1 bis 5 enthält und gegebenenfalls stellenweise auf das Fasermaterial im Direktdruck oder auf einen Zwischenträger im Transferdruck aufgebracht wird.

8. Wässrige Druckpaste zur Durchführung des Verfahrens gemäss Anspruch 7, dadurch gekennzeichnet, dass es neben einer Farbstofformulierung und gegebenenfalls weiteren üblichen Zusätzen das Verdickungsmittel gemäss einem der Ansprüche 1 bis 5 enthält.

9. Wässrige Druckpaste zur Durchführung des Verfahrens im Transferdruck gemäss Anspruch 7, dadurch gekennzeichnet, dass es neben einer Farbstofformulierung und dem Verdickungsmittel ein Bindemittel, vorzugsweise filmbildene Copolymerisate aus Acrylsäureestern und Vinylacetaten, Cellulosederivate oder Vinylpolymere und ein siliconölarmes bis siliconölfreies Entlüftungsmittel enthält.

10. Druckpaste nach Anspruch 9, dadurch gekennzeichnet, dass sie als Bindemittel Hydroxyäthylcellulose, Methylcellulose oder zu Polyvinylalkoholen hydrolisierte Polyvinylacetate, vorzugsweise ein Polyvinylalkohol enthält, welches ein Molekulargewicht von $1 \cdot 10^5$ bis $3 \cdot 10^5$ und ein Hydrolysegrad von 80 bis 90 Mol.-% aufweist.

11. Druckpaste nach Anspruch 9, dadurch gekennzeichnet, dass sie als Entlüftungsmittel siliconölhaltige oder siliconölfreie, hochsiedende Kohlenwasserstoffe, hydrierte Naphthalene, Mineralöle, fette Oele oder unlösliche Metallseifen oder deren Gemische, vorzugsweise siliconölhaltige oder siliconölfreie höhere Alkohole eines Siedepunktes über 100 °C, Terpentinöle, Mineralöle oder deren Gemische, insbesondere ein Octanol oder dessen Gemisch mit hochsiedenden Kohlenwasserstoffgemischen enthält, welches einen Gehalt an Siliconöl aufweist.

12. Der nach dem Verfahren gemäss Anspruch 7 bedruckte Zwischenträger für den Transferdruck, vorzugsweise bedruckte flexible Papierfolien.

13. Das nach dem Verfahren gemäss Anspruch 7 gefärbte und bedruckte Fasermaterial, vorzugsweise gefärbte und bedruckte textile Woll-, Baumwoll-, Polyester-, Polyamid-, Polyacrylnitril- oder Celluloseacetatfasern oder deren Gemische, vor allem Polyacrylnitril- oder Polyestergewebe oder Mischgewebe aus Polyester und Wolle oder Baumwolle, insbesondere Polyacrylnitril- oder Polyestergewebe.

**Claims**

1. A thickener which comprises
(A) an at least partially crosslinked copolymer of acrylic acid and acrylamide having a molar ratio of acrylic acid to acrylamide of $1 : 0 \cdot 9$ to $1 : 1 \cdot 1$ and a molecular weight of $1 \cdot 10^6$ to $6 \cdot 10^6$,
and
(B) a polyacrylic acid having a molecular weight of $6 \cdot 10^5$ to $1 \cdot 10^6$.

2. A thickener according to claim 1, wherein the copolymer (A) of acrylic acid and acrylamide and the polyacrylic acid (B) are structurally viscous in aqueous medium.

3. A thickener according to either of claims 1 or 2, which contains the copolymer (A) and the polyacrylic acid (B) in the weight ratio of (A) : (B) of 0.15 : 1 to 30 : 1, preferably of 5 : 1 to 8 : 1.

4. A thickener according to any one of claims 1 to 3, which is in the form of a water-in-oil emulsion which, besides containing the polymers (A) and (B), additionally contains a water-insoluble solvent, preferably a hydrocarbon, emulsifiers, preferably alkanolamides of high molecular fatty acids or esters of polyalcohols and high molecular fatty acids and adducts thereof with an alkylene oxide a neutralising agent preferably ammonia, an alkanolamine or an alkali metal hydroxide and optionally an antifoam or deaerator, which thickener preferably has a pH of 5.8 to 9 after being mixed with water in the ratio of 1 : 10 to 1 : 20.

5. A thickener according to claim 4, which contains
15 to 30 % by weight of polymers (A) and (B),

10 to 30 % by weight of paraffin oil,

3 to 15 % by weight of ethanolamides of fatty acids, sorbitan fatty acid esters and adducts thereof with ethylene oxide,

5 to 10 % by weight of an aqueous 25 % to 35 % solution of sodium hydroxide,

0 to 2 % by weight of a high boiling hydrocarbon as deaerator, and

13 to 67 % by weight of water.

6. Use of a thickener according to any one of claims 1 to 5, in aqueous printing pastes for dyeing and printing fibre material.

7. A process for dyeing and printing fibre material using an aqueous printing paste of a dye formulation, wherein said printing paste contains a thickener as claimed in any one of claims 1 to 5, and may be pattern printed onto areas of the fibre material by direct printing or onto areas of a support by transfer printing.

8. An aqueous printing paste for carrying out the process according to claim 7, which paste contains, besides a dye formulation and optionally further conventional ingredients, a thickener as claimed in any one of claims 1 to 5.

9. An aqueous printing paste for carrying out the process by transfer printing according to claim 7, which paste contains, besides a dye formulation and the thickener, a binder, preferably a film-forming copolymer of an acrylic ester and a vinyl acetate, a cellulose derivative or a vinyl polymer, and a deaerator which has a low content of silicone oil or which contains no silicone oil.

10. A printing paste according to claim 9, wherein the binder is hydroxyethyl cellulose, methyl cellulose or a polyvinyl acetate which has been hydrolysed to a polyvinyl alcohol, preferably a polyvinyl alcohol which has a molecular weight of $1 \cdot 10^5$ to $3 \cdot 10^5$ and a degree of hydrolysis of 80 to 90 mole %.

11. A printing paste according to claim 9, wherein the deaerator is a high boiling hydrocarbon, a hydrogenated naphthalene, a mineral oil, a fatty oil or an insoluble metal soap, or a mixture thereof which may optionally contain silicone oil, preferably a higher alcohol having a boiling point above 100 °C, a terpentine oil, a mineral oil or a mixture thereof, which may optionally contain silicone oil, in particular an octanol or a mixture thereof with a mixture of high boiling hydrocarbons having a content of silicone oil.

12. A support for transfer printing, printed by the process as claimed in claim 7, which preferably consists of flexible paper sheets.

13. Fibre material dyed or printed by a process as claimed in claim 7, preferably dyed or printed textile wool, cotton, polyester, polyamide, acrylic or cellulose acetate fibres, or blends thereof, in particular acrylic or polyester fabric or of blends of polyester and wool or cotton, preferably acrylic or polyester fabric.

**Revendications**

1. Agent épaississant, caractérisé en ce qu'il contient :

(A) un produit de copolymérisation, au moins partiellement réticulé, formé à partir d'acide acrylique et d'acrylamide, qui présente un rapport molaire acide acrylique/acrylamide allant de 1 · 0,9 à 1 : 1,1, et un poids moléculaire allant de $1 \cdot 10^6$ à $6 \cdot 10^6$,

et

(B) un poly(acide acrylique), qui présente un poids moléculaire allant de $6 \cdot 10^5$ à $1 \cdot 10^6$.

2. Agent épaississant selon la revendication 1, caractérisé en ce qu'il contient, en tant que composant (A) et (B), un produit de copolymérisation de l'acide acrylique et de l'acrylamide et un poly(acide acrylique) qui sont visco-élastiques en milieu aqueux.

3. Agent épaississant selon l'une des revendications 1 ou 2, caractérisé en ce qu'il contient le produit de copolymérisation en tant que composant (A) et le poly (acide acrylique) en tant que composant (B) en un rapport molaire (A) : (B) allant de 0,15 : 1 à 30 : 1, et de préférence allant de 5 : 1 à 8 : 1.

4. Agent épaississant selon l'une des revendications 1 à 3, caractérisé en ce qu'il se présente sous la forme d'une émulsion « eau dans huile », qui, en plus des produits de polymérisation (A) et (B), contient un solvant insoluble dans l'eau, de préférence des hydrocarbures, un agent émulsifiant, de préférence des alcanolamides d'acide gras à poids moléculaire élevé ou un ester formé à partir de polyalcools et d'acides gras à poids moléculaire élevé, et leurs produits d'addition avec les oxydes d'alkylène, un agent de neutralisation, de préférence l'ammoniac, une alcanolamine, ou bien un hydroxyde de métal alcalin, et éventuellement un agent de destruction des mousses et de désaération, l'agent épaississant présentant, après mélange avec de l'eau en des proportions allant de 1 : 10 à 1 : 20, une valeur de pH allant de préférence de 5,8 à 9.

5. Agent épaississant selon la revendication 4, caractérisé en ce qu'il contient :

15 à 30 % en poids des produits de polymérisation (A) et (B),

10 à 30 % en poids d'huile de paraffine,

3 à 15 % en poids d'éthanolamide d'acide gras, d'ester d'acide gras et de sorbitane, et de leurs produits d'addition avec l'oxyde d'éthylène,

5 à 10 % en poids d'une solution aqueuse à 25-35 % en poids d'hydroxyde de sodium,

0 à 2 % en poids d'un hydrocarbure à point d'ébullition élevé en tant qu'agent de désaération, et

13 à 67 % en poids d'eau.

6. Utilisation de l'agent épaississant conforme à l'une des revendications 1 à 5 dans des pâtes d'impression aqueuses pour la teinture et l'impression de matériaux fibreux.

7. Procédé de teinture et d'impression de matériaux fibreux utilisant les pâtes d'impression aqueuses formées à partir de formulations colorantes, caractérisé en ce que la pâte d'impression contient l'agent épaississant conforme à l'une des revendications 1 à 5, et qu'elle est déposée, éventuellement par places, sur le matériau fibreux dans un procédé d'impression directe, ou sur un support intermédiaire, dans un procédé d'impression par transfert.

8. Pâte d'impression aqueuse pour la réalisation du procédé conforme à la revendication 7, caractérisée en ce qu'elle contient, en plus d'une formulation colorante et éventuellement des autres adjuvants habituels, l'agent épaississant conforme à l'une des revendications 1 à 5.

9. Pâte d'impression aqueuse pour la réalisation du procédé en impression par transfert selon la revendication 7, caractérisée en ce qu'elle contient, en plus d'une formulation colorante et de l'agent épaississant, un liant, de préférence des produits de copolymérisation en forme de film constitués à partir d'esters de l'acide acrylique et d'acétates de vinyle, de dérivés de la cellulose, ou de polymères vinyliques, et un agent de désaération contenant peu à pas du tout d'huile de silicone.

10. Pâte d'impression selon la revendication 9, caractérisée en ce qu'elle contient, en tant que liant, de l'hydroxyéthylcellulose, de la méthylcellulose, ou des poly(acétate de vinyle) hydrolysés en poly(alcool vinylique), de préférence un poly(alcool vinylique) qui présente un poids moléculaire allant de $1 \cdot 10^5$ à $3 \cdot 10^5$, et un degré d'hydrolyse allant de 80 à 90 % en moles.

11. Pâte d'impression selon la revendication 9, caractérisée en ce qu'elle contient, en tant qu'agent de désaération, des hydrocarbures à haut point d'ébullition et contenant ou non de l'huile de silicone, des naphtalènes hydrogénés, des huiles minérales, des huiles grasses, ou des savons métalliques insolubles, ou leurs mélanges, de préférence des alcools supérieurs contenant ou non de l'huile de silicone et ayant un point d'ébullition supérieur à 100 °C, des essences de térébenthine, des huiles minérales, ou leurs mélanges, en particulier un octanol ou un mélange de celui-ci avec des mélanges d'hydrocarbures à haut point d'ébullition qui présente une certaine teneur en huile de silicone.

12. Support intermédiaire pour l'impression par transfert, imprimé selon le procédé conforme à la revendication 7, de préférence des feuilles de papier flexibles imprimées.

13. Matériaux fibreux teints et imprimés selon le procédé conforme à la revendication 7, de préférence fibres textiles, teintes et imprimées, en laine, en coton, en polyester, en polyamide, en polyacrylonitrile, ou en acétate de cellulose, ou leurs mélanges, avant tout tissus teints et imprimés en polyacrylonitrile ou en polyester ou tissus mélangés teints et imprimés en polyester et laine ou coton, en particulier tissus teints et imprimés en polyacrylonitrile ou en polyester.